# EUROPEAN PATENT APPLICATION

(11) **EP 2 698 451 A2**
(43) Date of publication of application: **19.02.2014**
(21) Application number: 13179467.9
(22) Date of filing: 06.08.2013
(51) Int. Cl.: C23C 28/04, F01D 5/28

(54) **Cavitation-resistant environmental barrier coating**

(30) Priority: 15.08.2012 US 201213585998
(71) Applicant: General Electric Company, Schenectady, New York 12345 (US)
(72) Inventor: Das, Rupak, Greenville, SC South Carolina 29615 (US)
(74) Representative: Szary, Anne Catherine

(57) **Abstract**

An environmental barrier coating (14), a method of application thereof, and an article (10) made thereby suitable for protecting components exposed to high-temperature environments with improved delamination resistance and cavitation resistance. The environmental barrier coating system (14) for a silicon-containing substrate (12) includes a bond coat layer (16) on the silicon-containing substrate (12) and at least one ceramic environmental barrier layer (18,20,22) on the bond coat layer (16). The bond coat layer (16) includes silicon and at least one doping material including elemental titanium. The doping material is located at grain boundaries within the bond coat layer in sufficient quantity to improve the delamination resistance and the cavitation resistance of increase the bond coat layer.

## Description

### BACKGROUND OF THE INVENTION

The present invention generally relates to coating systems suitable for protecting components exposed to high-temperature environments, such as the hostile thermal environment of a gas turbine engine. More particularly, this invention is directed to a bond coat layer on a silicon-containing region of a component such as a ceramic matrix composite (CMC) and to the incorporation of dopants in the grain boundaries of the bond coat layer to improve delamination resistance and cavitation resistance of the environmental barrier coating system (EBC).

Higher operating temperatures for gas turbine engines are continuously sought in order to increase their efficiency. Though significant advances in high temperature capabilities have been achieved through formulation of iron, nickel and cobalt-base superalloys, alternative materials have been investigated. For example, composite materials are currently being considered for such high temperature applications as combustor liners, vanes, shrouds, airfoils, and other hot section components of gas turbine engines. Of particular interest are silicon-based composites, such as silicon carbide (SiC) as a matrix and/or reinforcing material.

In many high temperature applications, a protective coating is beneficial or required for a Si-containing material. Such coatings should provide environmental protection by inhibiting the major mechanism for degradation of Si-containing materials in a corrosive water-containing environment, namely, the formation of volatile silicon monoxide (SiO) and silicon hydroxide (Si(OH)₄) products. A coating system having these functions will be referred to below as an environmental barrier coating (EBC) system. Important properties for the coating material include a coefficient of thermal expansion (CTE) compatible with the SiC-containing material, low permeability for oxidants, low thermal conductivity, stability and chemical compatibility with the Si-containing material and silica scale formed from oxidation.

Various single-layer and multilayer EBC systems have been investigated for use on Si-containing substrates. Coatings of zirconia partially or fully stabilized with yttria (YSZ) as a thermal barrier layer exhibit excellent environmental resistance. However, YSZ does not adhere well to Si-containing materials (SiC or silicon) because of a CTE mismatch (about 10 ppm/°C for YSZ as compared to about 4.9 ppm/°C for SiC/SiC composites). Mullite (3Al₂O₃.2SiO₂), barium-strontium-aluminosilicate (BSAS; (Ba1-xSrx)O-Al₂O₃-SiO₂) and other alkaline earth aluminosilicates have been proposed as protective coatings for Si-containing materials. For example, U.S. Patent No. 5,496,644 to Lee et al. and U.S. Patent No. 5,869,146 to McCluskey et al. disclose the use of mullite and U.S. Patent Nos. 6,254,935, 6,365,288, 6,387,456 and 6,410,148 to Eaton et al. disclose the use of BSAS as outer protective barrier coatings for silicon-containing substrates. In the Eaton et al. patents, BSAS barrier coatings are described as being bonded to a silicon-containing substrate with an intermediate layer (bond coat layer) that may be, among other possible materials, mullite or a mixture of mullite and BSAS. However, as coating thickness increases, strain energy due to the CTE mismatch between individual coating layers and the substrate increases as well, which can cause debonding and spallation of the coating system.

Further, when the bond coat layer comprises silicon, the silicon preferentially reacts with oxygen to form a non-gaseous product. The resulting silicon oxide (SiO₂) layer, while sometimes desirable, may reduce the cavitation resistance of the EBC system and even cause delamination or spallation due to a CTE mismatch with other EBC layers. Therefore, methods and systems which reduce the growth of the silicon oxide layer are desirable for certain applications.

In view of the above, it can be appreciated that there are certain problems, shortcomings or disadvantages associated with the prior art, and that it would be desirable if improved EBC systems were developed with improved delamination resistance and cavitation resistance to at least partly overcome or avoid these problems, shortcomings or disadvantages.

### BRIEF DESCRIPTION OF THE INVENTION

The present invention provides an environmental barrier coating, a method of application thereof, and an article made thereby suitable for protecting components exposed to high-temperature environments with improved delamination resistance and cavitation resistance.

According to a first aspect of the invention, an environmental barrier coating system for a silicon-containing substrate that includes a bond coat layer on the silicon-containing substrate and at least one ceramic environmental barrier layer on the bond coat layer. The bond coat layer includes silicon and at least one doping material including elemental titanium. The doping material is located at grain boundaries within the bond coat layer in sufficient quantity to improve the delamination resistance and the cavitation resistance of increase the bond coat layer.

According to a second aspect of the invention, an article includes a silicon-containing substrate and an environmental barrier coating system on the silicon-containing substrate. The environmental barrier coating system includes a bond coat layer on the silicon-containing substrate and at least one ceramic environmental barrier layer on the bond coat layer. The bond coat layer includes silicon and at least one doping material including elemental titanium. The doping material is located at grain boundaries within the bond coat layer in sufficient quantity to improve the delamination resistance and the cavitation resistance of increase the bond coat layer.

According to a third aspect of the invention, a method of applying an environmental barrier coating system on a silicon-containing substrate that includes forming a bond coat layer that includes silicon on the silicon-containing substrate, doping the bond coat layer with a doping material that includes elemental titanium in a manner so that the doping material is located at grain boundaries within the bond coat layer in sufficient quantity to improve the delamination resistance and cavitation resistance of the bond coat layer, and applying at least one ceramic layer on the bond coat layer.

A technical effect of the invention is the ability to protect components exposed to high-temperature environments with improved EBC systems with improved delamination resistance and cavitation resistance.

Other aspects and advantages of this invention will be better appreciated from the following detailed description.

### BRIEF DESCRIPTION OF THE DRAWINGS

FIG. 1 is a schematic illustration of a cross-sectional view of a ceramic article having an environmental barrier coating system in accordance with an embodiment of this invention.
FIG. 2 is a schematic illustration of a microstructure of a bond coat layer of the environmental barrier coating system of FIG. 1 in accordance with an embodiment of this invention.

### DETAILED DESCRIPTION OF THE INVENTION

Embodiments described herein generally relate to environmental barrier coating (EBC) systems for high temperature ceramic components.

The EBC systems described herein may be suitable for use in conjunction with CMCs or monolithic ceramics. As used herein, CMC refers to silicon-containing matrix and reinforcing materials. Some examples of CMC systems acceptable for use herein can include, but should not be limited to, materials having a matrix and reinforcing fibers comprising silicon carbide, silicon nitride, and mixtures thereof. As used herein, monolithic ceramics refers to materials comprising silicon carbide, silicon nitride, and mixtures thereof. CMC systems and monolithic ceramics are collectively referred to herein as ceramics.

The EBC systems herein may be suitable for application to ceramic components, or simply components, found in high temperature environments (e.g. operating temperatures of about 2500°C), such as those present in turbomachinery, including but not limited to turbine engines such as those used in the power generating industry.

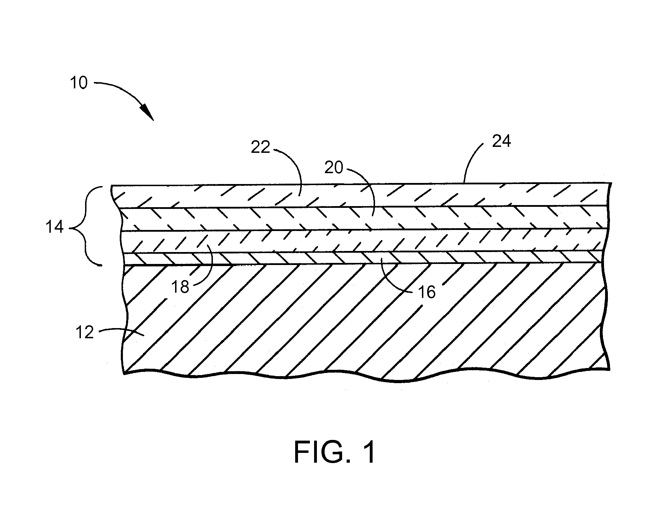

More specifically, FIG. 1 represents an article 10 as comprising an EBC system 14 on a silicon-containing substrate 12, which can include a bond coat layer 16 adjacent to the silicon-containing substrate 12, an optional silica layer 18 adjacent to the bond coat layer 16, at least one optional transition layer 20 adjacent to the bond coat layer 16 (or the silica layer 18 if present), and an outer layer 22 adjacent to the transition layer 20. The outer layer 22 forms an outermost surface 24 of the component 10. Although not all of the layers 18, 20 and 22 on the bond coat layer 16 may be necessary for individual applications, the EBC system 14 has at least one ceramic layer 18, 20, and/or 22 on the bond coat layer 16.

If the article 10 is one of the aforementioned Si-based CMC materials, a preferred composition for the bond coat layer 16 comprises elemental silicon or a silicon-containing composition, such as SiC, Si3N4, etc. Suitable materials for the transition layer 20 include, but are not limited to, silicates, alkaline-earth metal aluminosilicates and/or rare-earth metal silicates, and particularly compounds of rare-earth oxides and silicates such as barium-strontium-aluminosilicates (BSAS) and other alkaline-earth aluminosilicates. Suitable materials for the outer layer 22 include, but are not limited to, YSZ alone or with additions of rare-earth oxides capable of promoting properties of the outer layer 22. Outer layers formed of other ceramic materials are also foreseeable, for example, zirconate or perovskite materials.

The bond coat layer 16 may be applied by plasma spray processes, chemical vapor deposition (CVD) processes, electron beam physical vapor deposition (EBPVD) processes, dipping in molten silicon, sputtering processes, and other conventional application processes known to those skilled in the art. The forming of the bond coat layer 16 may be followed by a conventional heat treatment process known to those skilled in the art.

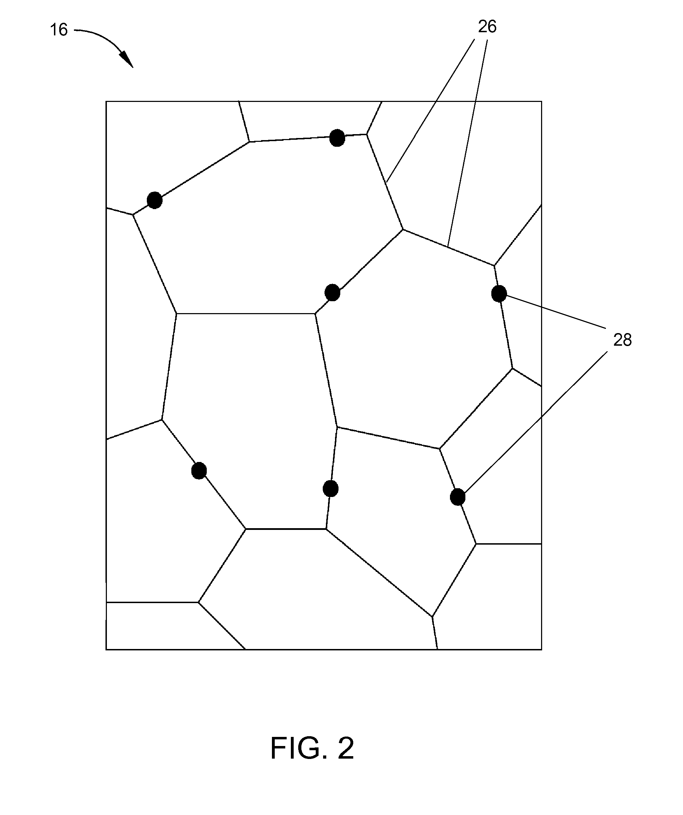

In accordance with an embodiment of the present invention, strategic proportional doping of the bond coat layer 16 is performed after the heat treatment. As used herein, the term strategic proportional doping refers to any doping technique that allows for one or more doping materials to be directly applied to grain boundaries within at least a surface region of the bond coat layer 16. For example, suitable doping processes may include ion implantation, impregnation, or liquid infiltration. The bond coat layer 16 is doped with one or more doping materials consisting entirely of elemental titanium or comprising a compound comprising elemental titanium. FIG. 2 schematically represents a microstructure of the bond coat layer 16 having doping materials 28 located on or near the grain boundaries 26 of the bond coat layer 16. It will be appreciated that FIG. 2 is for illustrative purposes only and is not to scale.

The doping material 28 is heterogeneously deposited over a region or the entirety of the outermost surface 24 of the bond coat layer 16. The doping material 28 will likely preferentially diffuse to the grain boundaries 26 within the bond coat layer 16 as the grain boundary energy is reduced by the doping material 28. The doping material 28 accumulates at the grain boundaries 26 within the bond coat layer 16 in sufficient quantity to improve the delamination resistance and cavitation resistance of the bond coat layer 16. A sufficient quantity of the doping material 28 located at the grain boundaries 26 is dependent on the region covered and the sticking coefficient (that is, the ratio of the average number of gas particles sticking to the surface to the average number gas particles incident on the surface) of the doping material 28 used as well as other parameters such as the temperature of the bond coat layer 16. Preferably, at least five percent by weight doping material 28 is located at the grain boundaries 26, and more preferably between about five and about fifteen percent by weight.

The elemental titanium should be present in the bond coat layer 16 in an amount of at least five weight percent to have the desired effect on the CTE of the bond coat layer 16, but not exceed about fifteen weight percent in order to avoid any negative impact on the physical properties of the bond coat layer 16. Preferably, the elemental titanium is present in the bond coat layer 16 in an amount of about five to about ten weight percent, and more preferably in an amount of about seven to about ten weight percent.

By doping the bond coat layer 16 with the doping material 28, the CTE of the bond coat layer 16 may be increased to reduce the mismatch between the bond coat layer 16 and the other layers 18, 20 and 22 of the EBC system 14. For example, the CTE of fused silicon is about 0.55 ppm/°C and the CTE of SiC-SiC CMC materials is about 4 ppm/°C. In contrast, YSZ, commonly used as an outermost layer 22 in EBC systems, has a CTE of about 10 ppm/°C for YSZ. Therefore, doping the bond coat layer 16 with the doping material 28 which contains elemental titanium, with a CTE of about 9.5 ppm/°C, can increase the CTE of the bond coat layer 16 to be closer to the CTE of the other layers in the EBC system 14. In the case of a bond coat layer 16 comprised of fused silica and a doping material 28 comprising titanium (Ti), the CTE of the titanium will compensate for the fused silica and hinder the formation of voids within the bond coat layer 16 typically caused by the CTE mismatch reducing conventional cavitation problems. Preferably, the CTE of the bond coat layer 16 is at least about 2.6 ppm/°C, and more preferably is about 4 ppm/°C to about 5 ppm/°C.

Additionally, the doping material 28 preferably acts as a barrier to grain boundary sliding by pinning down dislocation clouds around the grain boundaries 26. The doping material 28 acts as the obstacles to the grain boundary movements and reduces the motions of dislocations, thereby increasing the grain boundary sliding activation energy in the bond coat layer 16. The system then acts similar to the classic Cottrell Atmosphere, where the doping material 28 gets caught by the dislocations and consequently strengthens the matrix of the bond coat layer 16. This increase in grain boundary sliding activation energy substantially improves the overall delamination resistance and cavitation resistance of the bond coat layer 16.

Thermal growth of a silicon dioxide (SiO₂) layer on the bond coat layer 16 may be reduced due to the presence of the doping material 28 further reducing the CTE mismatch within the EBC system 14. The titanium within the bond coat layer 16 competes with the silicon for oxygen to form titanium dioxide rather than silicon dioxide. This competition may result in an oxygen deficiency near the surface of the bond coat layer 16. This deficiency will reduce the formation of SiO and SiO₂ which can reduce further CTE mismatch within the EBC system 14.

While the invention has been described in terms of preferred embodiments, it is apparent that other forms could be adopted by one skilled in the art. For example, the doping processes could differ from that described and materials other than those noted could be used. Therefore, the scope of the invention is to be limited only by the following claims.

## Claims

1. An environmental barrier coating system for a silicon-containing substrate, the environmental barrier coating system comprising:
a bond coat layer on the silicon-containing substrate, the bond coat layer comprising silicon and at least one doping material comprising elemental titanium, the doping material being located at grain boundaries within the bond coat layer in sufficient quantity to improve the delamination resistance and the cavitation resistance of the bond coat layer; and
at least one ceramic environmental barrier layer on the bond coat layer.

2. The environmental barrier coating system of claim 1, wherein the elemental titanium is present in the bond coat layer in the amount of about five to about fifteen percent by weight.

3. The environmental barrier coating system of claim 1 or claim 2, wherein the silicon-containing substrate comprises a ceramic matrix composite.

4. The environmental barrier coating system of any preceding claim, wherein the doping material is located at the grain boundaries of the bond coating layer in a quantity of at least ten percent by weight.

5. The environmental barrier coating system of any preceding claim, wherein the silicon-containing substrate is a component of a gas turbine.

6. The environmental barrier coating system of any preceding claim, wherein the bond coat layer has a coefficient of thermal expansion of between about 2.6 ppm/°C to about 4.0 ppm/°C.

7. An article comprising:
a silicon-containing substrate; and
an environmental barrier coating system on the silicon-containing substrate, wherein the environmental barrier coating system is as defined in any preceeding claim.

8. A method of applying an environmental barrier coating system on a silicon-containing substrate, the method comprising:
forming a bond coat layer comprising silicon on the silicon-containing substrate;
doping the bond coat layer with a doping material comprising elemental titanium in a manner so that the doping material is located at grain boundaries within the bond coat layer in sufficient quantity to improve the delamination resistance and cavitation resistance of the bond coat layer; and
applying at least one ceramic layer on the bond coat layer.

9. The method of claim 8, wherein the elemental titanium is present in the bond coat layer in the amount of about five to about fifteen percent by weight.

10. The method of claim 8 or claim 9, wherein the silicon-containing substrate comprises a ceramic matrix composite.

11. The method of any one of claims 8 to 10, wherein the doping material is located at the grain boundaries of the bond coating layer in a quantity of at least ten percent by weight.

12. The method of any one of claims 8 to 11, wherein the doping step is performed by ion implantation.

13. The method of any one of claims 8 to 12, wherein the silicon-containing substrate is a component of a gas turbine.

14. The method of any one of claims 8 to 13, wherein the bond coat layer has a coefficient of thermal expansion of between about 2.6 ppm/°C to about 4.0 ppm/°C.
